Europäisches Patentamt

European Patent Office

Office européen des brevets

(19)

(11) Veröffentlichungsnummer: **0 363 405 B1**

## (12) EUROPÄISCHE PATENTSCHRIFT

(45) Veröffentlichungstag der Patentschrift: **21.10.92**

(21) Anmeldenummer: **88904906.0**

(22) Anmeldetag: **01.06.88**

(86) Internationale Anmeldenummer:
**PCT/DE88/00322**

(87) Internationale Veröffentlichungsnummer:
**WO 88/10022 (15.12.88 88/27)**

(51) Int. Cl.5: **H02K 21/14**, H02K 1/27,
H02K 21/46

(54) **MEHRPHASIGE, PERMANENTMAGNETERREGTE ELEKTRISCHE MASCHINE SYNCHRONER BAUART.**

(30) Priorität: **04.06.87 DE 3718983**

(43) Veröffentlichungstag der Anmeldung:
**18.04.90 Patentblatt 90/16**

(45) Bekanntmachung des Hinweises auf die
Patenterteilung:
**21.10.92 Patentblatt 92/43**

(84) Benannte Vertragsstaaten:
**AT BE CH DE FR GB IT LI NL SE**

(56) Entgegenhaltungen:
**CH-A- 331 335      DE-A- 3 204 864
DE-A- 3 522 525      DE-B- 1 093 475
GB-A- 2 125 229      US-A- 3 078 381**

(73) Patentinhaber: **SIEMENS AKTIENGESELL-
SCHAFT
Wittelsbacherplatz 2
W-8000 München 2(DE)**

(72) Erfinder: **LEITGEB, Wilhelm
Kappelstr. 14
W-8501 Burgthann-Mimberg(DE)**

EP 0 363 405 B1

## Beschreibung

Die Erfindung bezieht sich auf eine mehrphasige, permanentmagneterregte elektrische Maschine synchroner Bauart mit einer über Stromrichter derart gespeisten Ständerwicklung, daß außer dem von den Permanentmagneten erzeugten Erregergrundfeld durch die stromdurchflossene Ankerwicklung ein zusätzliches magnetisches Längsfeld erzeugt wird, das sich dem Erregergrundfeld in der Pollängsachse addiert bzw. subtrahiert, und bei der im wicklungsfreien Läufer Permanentmagnete angeordnet sind, sowie weichmagnetische Werkstoffe mit Zwischenräumen aus nichtmagnetischem Material, die zum Luftspalt hin offene, ineinanderliegende Schleifen bilden, welche die Pollücke umschließen.

Eine derartige permanentmagneterregte elektrische Maschine, die im Feld veränderbar ist, ist aus der DE-OS 34 01 163, insbesondere aus den Figuren 10 und 11 und den Seiten 17, 18 bekannt. Die bekannte Maschine ist in Flußkonzentrationsanordnung (Sammlerkonfiguration) ausgeführt. Dabei liegen die Permanentmagnete - sich in radialer Richtung erstreckend - jeweils in der Pollücke und der Pol ist durch einen mittigen Spalt in zwei Teilpole unterteilt. Die Verbindung zwischen den in ihrer Flußrichtung senkrecht zum Spalt zwischen den Teilpolen stehenden Permanentmagneten und dem Luftspalt zum Ständer wird über eine lamellenartige Weicheisenpolanordnung mit dazwischen liegenden nichtmagnetischen Räumen erreicht. Diese Weicheisenlamellen, die aus magnetisch gut leitendem Stahl oder auch aus einigen Schichten Dynamoblech hergestellt sind, bilden somit zum Luftspalt hin offene, ineinander liegende Schleifen bilden, welche die Pollücke umschließen, in welcher der Permanentmagnet liegt, der sich in radialer Richtung über alle Weicheisenlamellen erstreckt und somit die Schleifen unterbricht. Die Pollücke ist dadurch gebildet, daß der Permanentmagnet und die innerste Schleife aus Weicheisenlamellen einen deutlichen Abstand vom Luftspalt aufweisen, wobei die Breite der Pollücke so gewählt ist, daß die notwendige Erregerdurchflutung für das zu überlagernde, vom Ständer generierte zusätzliche magnetische Längsfeld verfügbar ist. Sie muß daher mindestens einer Nutteilung der Ständerwicklung entsprechen.

Durch diese besondere konstruktive Gestaltung des Läufers der bekannten permanentmagneterregten elektrischen Maschine wird für einen bestimmten Erregungsgrad das Erregergrundfeld ausschließlich leistungslos von den Permanentmagneten erzeugt, während höhere oder niedrigere Felddichten unter Zuhilfenahme der Ankererregung bereit gestellt werden. Dieses vom Ständer generierte zusätzliche magnetische Längsfeld wird dem Erregergrundfeld mit veränderlichen Vorzeichen und Betrag überlagert. Dadurch ist die permanentmagneterregte Maschine in ihrem Feld veränderbar. Erhebliche Beschränkungen der Wirksamkeit dieser bekannten Anordnung verursacht aber der Umstand, daß sowohl der für das Ständerlängsfeld maßgebliche magnetische Widerstand infolge der quer zur magnetischen Längsachse angeordneten Permanentmagnete trotz der angewendeten Flußkonzentrationsbauweise als auch das verbleibende Ankerquerfeld und deshalb der Aufwand für den Strom- bzw. Umrichter wegen der Flußkonzentrationsbauweise relativ hoch ist.

Der Erfindung liegt daher die Aufgabe zugrunde, eine derartige, mehrphasige, permanentmagneterregte elektrische Maschine mit Feldstellmöglichkeit (Feldschwächung) quantitativ zu verbessern, damit ein höherer Feldstellbereich erreicht oder aber der Strom- bzw. Umrichteraufwand reduziert wird.

Zur Lösung dieser Aufgabe ist bei einer mehrphasigen, permanentmagneterregten elektrischen Maschine der eingangs beschriebenen Art gemäß der Erfindung der Läufer in mindestens zwei unterschiedlich aufgebaute, axial hintereinander liegende Abschnitte unterteilt, von denen nur der erste Abschnitt mit Permanentmagneten und den offenen Schleifen aus weichmagnetischem Werkstoff versehen ist und der andere, zweite Abschnitt nur die jeweils über einen Teil der Polbedeckung angeordneten, zum Luftspalt hin offenen, ineinanderliegenden Schleifen aus weichmagnetischen Werkstoff zur Führung des durch die Ankerwicklung hervorgerufenen zusätzlichen magnetischen Längsfeldes aufweist, die untereinander durch nichtmagnetischen Werkstoff getrennt sind.

Durch diese Unterteilung des Läufers in axial hintereinander liegende Abschnitte, von denen der eine, erste im wesentlichen den durch die Permanentmagnete erzeugten konstanten Erregergrundfluß $B_E$ der Maschine und der andere, zweite das nach Größe und Vorzeichen veränderbare, vom Ständer generierte Überlagerungslängsfeld $B_L$ führt, ist eine räumliche Überlagerung der beiden Felder vermieden. Man kann daher beide Abschnitte unterschiedlich bemessen und ausbilden, jeden allein in Hinblick auf das in ihm hauptsächlich herrschende Feld. Die räumliche Trennung der beiden Abschnitte läßt sich sowohl bei Maschinen mit Flußkonzentrationsanordnung als auch bei Maschinen mit Luftspaltmagnetanordnung vorteilhaft verwirklichen. Sie bewirkt einerseits, daß der für das zu überlagernde magnetische Längsfeld $B_L$ maßgebliche magnetische Widerstand um den Anteil der Permanentmagnete verringert wird und andererseits ist die Möglichkeit geschaffen, im Bereich des permanentmagneterregten Erregergrundfeldes $B_E$ die bei großen Feldstellbereichen besonders kritische Ankerrückwirkung durch einen entsprechend großen Luftspalt zu begrenzen. Weiterhin läßt sich infolge der räumlichen Trennung der Abschnitte auch der Sättigungseffekt im zweiten Abschnitt mit dem magnetischen Längsfeld ausnutzen, wodurch der Einfluß der Ankerrückwirkung weiterhin reduziert werden kann. Dies bedeutet eine Verringerung des für die Elektronik zur Speisung der Ständerwicklung erforderlichen Aufwandes.

Durch die im ersten und zweiten Abschnitt des Läufers ineinanderliegende Schleifen aus weichmagnetischem Werkstoff, welche die Pollücke umschließen und zum Luftspalt hin offen sind, wird die Führung des magnetischen Feldes verbessert und bei gleichen magnetischen Widerstand in Richtung der Längsachse der magnetische Widerstand in Richtung der Querachse vergrößert.

Es ist besonders vorteilhaft, wenn im Läufer der mit den Permanentmagneten ausgerüstete erste Abschnitt mittig angeordnet ist und zwischen zwei der anderen zweiten Abschnitte liegt. Dadurch befindet sich der das zusätzliche magnetische Längsfeld $B_L$ führende andere zweite Abschnitt jeweils unmittelbar benachbart zu den Lagern der Läuferwelle, d. h. in einem Bereich, in dem die Durchbiegung der Läuferwelle gering ist. Man kann auf diese Weise den magnetischen und auch mechanischen Luftspalt in diesem Bereich klein wählen oder insgesamt die Drehzahl des Läufers erhöhen, ohne die Gefahr des Auftretens von Schwingungen, wie sie infolge von ungleichmäßigen magnetischen Zug, z. B. hervorgerufen durch Fertigungstoleranzen, auftreten können, zu vergrößern.

Weiterhin kann man zusätzlich durch eine unterschiedliche Wahl der Polbedeckung derart, daß diese im ersten Abschnitt mit den Permanentmagneten größer als im zweiten Abschnitt ist, eine weitere Absenkung des Einflusses der Ankerrückwirkung erzielen.

Im folgenden sei die Erfindung anhand des in den Figuren 1 bis der Zeichnung dargestellten Ausführungsbeispiels noch näher erläutert. Figur 1 zeigt, schematisch dargestellt, die Ansicht eines sich in Längsrichtung erstreckenden Läufers einer permanentmagneterregten, elektrischen Maschine. Die Figuren 2 und 3 zeigen, jeweils prinzipiell, den Aufbau des Läufers, wie er in einem Radialschnitt gegeben ist, in abgewickelter Darstellung.

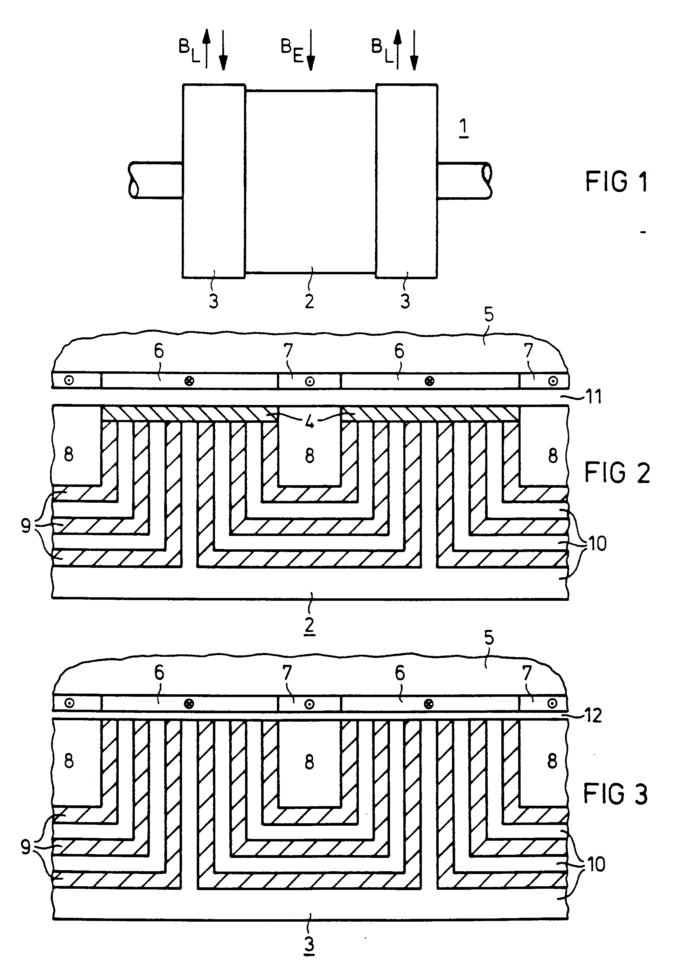

Der wicklungsfreie Läufer 1 einer permanentmagneterregten elektrischen Maschine synchroner Bauart, z. B. für den Antrieb einer Werkzeugmaschine oder eines Fahrzeuges mit hoher Drehzahl, ist aus zwei axial hintereinander liegenden Abschnitten 2 und 3 zusammengesetzt, von denen nur der erste Abschnitt 2 mit Permanentmagneten 4 versehen ist und somit das Erregergrundfeld $B_E$ führt. Es handelt sich hierbei um eine Maschine mit Luftspaltmagnetanordnung. Der mit den Permanentmagneten 4 ausgerüstete erste Abschnitt 2 ist mittig angeordnet und liegt zwischen zwei jeweils nur angenähert die halbe Länge des Abschnittes 2 aufweisenden anderen zweiten Abschnitten 3. Der Aufbau des ersten Abschnittes 2 ist in der Figur 2 dargestellt, während die Figur 3 den Aufbau des anderen zweiten Abschnittes 3 zeigt, die sich hinsichtlich der Anordnung der weichmagnetischen und nichtmagnetischen Werkstoffe entsprechen, abgesehen von den Permanentmagneten 4.

Der Ständer 5 der permanentmagneterregten elektrischen Maschine synchroner Bauart ist in den Figuren 2 und 3 jeweils nur schematisch angedeutet. Er trägt eine in Nuten liegende mehrphasige Ständerwicklung, die von einem nicht dargestellten gesteuerten Stromrichter, Pulswechselrichter, mit rechteckförmigen Strömen gespeist wird. Die Figuren 2 und 3 zeigen zur Vereinfachung der Darstellung lediglich die durch die Ständerwicklung erzeugten Strombeläge, von denen der eine Strombelag 6, gekennzeichnet durch ein Kreuz in einem Kreis, dem Strombelag der über dem Polschuh liegenden Leiter entspricht, die jeweils im Abschnitt 2 einem Permanentmagnet 4 bzw. im Abschnitt 3 dem lamellierten Pol gegenüber stehen, während der andere Strombelag 7, symbolisiert durch einen Kreis mit einem Punkt, dem Strombelag der Leiter entspricht, die sich über der Pollücke 8 befinden. Die Breite dieser Pollücke 8 ist so gewählt, daß der Strombelag 7 die gewünschte Erregerdurchflutung zur Regelung des Gesamtfeldes der Maschine ergibt.

Im ersten Abschnitt 2 und in den Abschnitten 3 ist die Pollücke 8 jeweils von ineinander liegenden, zum Ständer 5 hin offenen Schleifen 9 aus weichmagnetischen Werkstoff umgeben. Diese dienen der Flußführung und sind lamelliert ausgebildet, z. B. als gebogene Stahlbleche. Zwischen ihnen liegen entsprechende Schleifen 10 aus nichtmagnetischem Material, das auch die Pollücke 8 ausfüllt. Dadurch enhält jeder Pol einen mittigen mit unmagnetischem Material ausgefüllten Spalt.

Die welchmagnetischen Schleifen 9 enden im ersten Abschnitt 2 an den Permanentmagneten 4. Der magnetische Luftspalt für das Erregergrundfeld $B_E$ ergibt sich dabei aus der Dicke der Permanentmagnete 4 und dem Luftspalt 11, in dem sich noch nicht dargestellte nichtmagnetische Bandagen befinden, welche die Permanentmagnete 4 am Läuferkörper halten. Der somit in Richtung der Querachse wirksame magnetische Widerstand ist in diesem ersten Abschnitt 2 entprechend dem magnetischen Luftspalt zum Ständer 5 verhältnismäßig groß. Im anderen zweiten Abschnitt 3, der in Hinblick auf die Anordnung der weichmagnetischen Schleifen 9 und der nichtmagnetischen Schleifen 10 gleich ausgebildet ist, ist dagegen der mechanische Luftspalt 12, der hier dem magnetischen Luftspalt entspricht, wesentlich kleiner gewählt.

Wie in Figur 1 durch Pfeile angedeutet, führt der erste Abschnitt 2 des Läufers 1 das Erregergrundfeld $B_E$, während der andere zweite Abschnitt 3 im wesentlichen das vom Ständerstrombelag 7 magnetisierte und durch entsprechende Steuerung der Ständerströme nach Größe und Vorzeichen veränderbare zusätzliche magnetische Längsfeld $B_L$ leitet, welches der Feldstellung dient. Durch die Schleifen 9 aus weichmagnetischem Material ist im Abschnitt 2 einerseits der magnetische Längswiderstand selbst für Luftspaltinduktionen bis zu 1,2 Tesla gering, während andererseits die Ankerrückwirkung (Quermagnetisierung) durch den großen magnetischen Luftspalt kräftig unterdrückt wird. Infolge des wesentlich kleineren Luftspaltes 12 im Abschnitt 3 ist selbst für größere Feldstellbereiche nur ein geringer Ständerstrombelag 7 erforderlich, so daß die Größe der Pollücke 8 klein gehalten werden kann und damit eine hohe Polbedeckung der Maschine möglich ist.

Insgesamt ist bei dieser Maschine ein großer Feldstellbereich und entsprechend ein hoher Drehzahlstellbereich bei verhältnismäßig niedrigen Gesamtaufwand von Magnetmaterial und Stromrichterelementen nebst ihrer Steuerung möglich.

## Patentansprüche

1. Mehrphasige, permanentmagneterregte elektrische Maschine synchroner Bauart mit einer über Stromrichter derart gespeisten Ständerwicklung, daß außer dem von den Permanentmagneten (4) erzeugten Erregergrundfeld ($B_E$) durch die stromdurchflossene Ankerwicklung ein zusätzliches magnetisches Längsfeld ($B_L$) erzeugt wird, das sich dem Erregergrundfeld in der Pollängsachse addiert bzw. subtrahiert, und bei der im wicklungsfreien Läufer (1) Permanentmagnete (4) angeordnet sind, sowie weichmagnetische Werkstoffe (9) mit Zwischenräumen (10) aus nichtmagnetischem Material, die zum Luftspalt (11) hin offene, ineinanderliegenden Schleifen (9, 10) bilden, welche die Pollücke (8) umschließen, **dadurch gekennzeichnet,** daß der Läufer (1) in mindestens zwei unterschiedlich aufgebaute, axial hintereinander liegende Abschnitte (2, 3) unterteilt ist, von denen nur der erste Abschnitt (2) mit Permanentmagneten (4) und den offenen Schleifen (9) aus weichmagnetischem Werkstoff versehen ist und der andere, zweite Abschnitt (3) nur die jeweils über einen Teil der Polbedeckung angeordneten, zum Luftspalt (12) hin offenen, ineinanderliegenden Schleifen (9) aus weichmagnetischen Werkstoff zur Führung des durch die Ankerwicklung hervorgerufenen zusätzlichen magnetischen Längsfeldes ($B_L$) aufweist, die untereinander durch nichtmagnetischen Werkstoff getrennt sind.

2. Mehrphasige, permanentmagneterregte elektrische Maschine nach Anspruch 1, **dadurch gekennzeichnet,** daß im Läufer (1) der mit den Permanentmagneten (4) ausgerüstete erste Abschnitt (2) mittig angeordnet ist und zwischen zwei der anderen zweiten Abschnitte (3) liegt.

3. Mehrphasige, permanentmagneterregte elektrische Maschine nach Anspruch 1 oder 2, **dadurch gekennzeichnet,** daß in dem ersten Abschnitt (2) die Permanentmagnete (4) am Luftspalt (11) liegend angeordnet sind.

4. Mehrphasige, permanentmagneterregte elektrische Maschine nach einem der Ansprüche 1 - 3, **dadurch gekennzeichnet,** daß der Luftspalt (12) zum Ständer (5) im zweiten Abschnitt (3) kleiner ist als der Luftspalt (11) zwischen den Permanentmagneten (4) des ersten Abschnittes (2) und dem Ständer (5).

5. Mehrphasige, permanentmagneterregte elektrische Maschine nach einem der Ansprüche 1 - 4, **dadurch gekennzeichnet,** daß die Polbedeckung im ersten Abschnitt (2) größer als im zweiten Abschnitt (3) ist.

## Claims

1. Multiphase, electrical machine excited by permanent magnets and of synchronous type of construction with a stator winding, supplied by way of power converters in such a way that, besides the exciter basic field ($B_E$) produced by the permanent magnets (4), an additional magnetic longitudinal field ($B_L$) is produced, by means of the current-carrying armature winding, which adds to or subtracts from the exciter basic field in the pole longitudinal axis, and wherein permanent magnets (4) are arranged in the winding-free rotor (1), as well as softmagnetic materials (9) with intermediate spaces (10) of non-magnetic material, which form loops (9,10) open towards the air gap (11) and engaging into one another, which enclose the pole gap (8), characterized in that the rotor (1) is divided into at least two differently constructed sections (2, 3) which lie axially behind one another, of which only the first section (2) is provided with permanent magnets (4) and the open loops (9) of soft-magnetic material and the other, second section (3) only has the loops (9) which are each arranged over a part of the pole covering, are open towards the air gap (12), engage into one another and consist of soft-magnetic material for guiding the additional magnetic longitudinal field (B$_L$) generated by the armature winding, the loops being separated from one another by non-magnetic material.

2. Multiphase, electrical machine excited by permanent magnets according to claim 1, characterized in that in the rotor (1) the first section (2) equipped with the permanent magnets (4) is arranged centrally and lies between two of the other two sections (3).

3. Multiphase, electrical machine excited by permanent magnets according to claim 1 or 2, characterized in that in the first section (2) the permanent magnets (4) are arranged so that they lie on the air gap (11).

4. Multiphase, electrical machine excited by permanent magnets according to one of claims 1 - 3, characterized in that the air gap (12) to the stator (5) in the second section (3) is smaller than the air gap (11) between the permanent magnets (4) of the first section (2) and the stator (5).

5. Multiphase, electrical machine excited by permanent magnets according to one of claims 1 - 4, characterized in that the pole covering in the first section (2) is greater than in the second section (3).

**Revendications**

1. Machine électrique polyphasée excitée par des aimants permanents, de type synchrone, comportant un enroulement statorique alimenté par l'intermédiaire d'un convertisseur statique de sorte qu'en dehors du champ de base d'excitation (B$_E$) produit par les aimants permanents (4), l'enroulement d'induit parcouru par le courant produit un champ longitudinal magnétique supplémentaire (B$_L$), qui s'ajoute ou est soustrait du champ de base d'excitation le long de l'axe longitudinal des pôles, et dans lequel dans le rotor (1), qui ne comporte aucun enroulement, sont disposés des aimants permanents (4) ainsi que des matériaux magnétiques doux (9) comportant des espaces intercalaires (10) en un matériau amagnétique, qui forment des boucles imbriquées (9,10), qui s'ouvrent en direction de l'entrefer (11) et entourent les intervalles (8) entre les pôles, caractérisée par le fait que le rotor (1) est subdivisé en au moins deux sections (2,3) qui ont des constitutions différentes, sont disposées axialement l'une derrière l'autre et dont seule la première section (2) comporte des aimants permanents (4) et les boucles ouvertes (9) réalisées en un matériau magnétique doux, tandis que l'autre, c'est-à-dire la seconde section (3) comporte uniquement les boucles imbriquées (9), qui sont disposées respectivement au-dessus d'une partie du revêtement polaire, sont ouvertes en direction de l'entrefer (12) et sont réalisées en un matériau magnétique doux, pour le guidage du champ magnétique longitudinal supplémentaire (B$_L$) produit par l'enroulement d'induit, les boucles étant séparées les unes des autres par un matériau amagnétique.

2. Machine électrique polyphasée excitée par des aimants permanents suivant la revendication 1, caractérisée par le fait que la première section (2) pourvue des aimants permanents (4) est disposée de façon centrée dans le rotor (1) et est située entre deux des autres secondes sections (3).

3. Machine électrique polyphasée excitée par des aimants permanents suivant la revendication 1 ou 2, caractérisée par le fait que dans la première section (2), les aimants permanents (4) sont disposés le long de l'entrefer (11).

4. Machine électrique polyphasée excitée par des aimants permanents suivant l'une des revendications 1-3, caractérisée par le fait que l'entrefer (12) par rapport au stator (5) dans la seconde section (3) est plus petit que l'entrefer (11) présent entre l'aimant permanent (4) de la première section (2) et le stator (5).

5. Machine électrique polyphasée excitée par des aimants permanents selon l'une des revendications 1-4, caractérisée en ce que le revêtement polaire dans la première section (2) est plus étendu que dans la seconde section (3).

FIG 1

FIG 2

FIG 3